# EUROPÄISCHE PATENTSCHRIFT

(11) **EP 3 058 248 B1**
(45) Veröffentlichungstag und Bekanntmachung des Hinweises auf die Patenterteilung: **12.07.2017**
(21) Anmeldenummer: 14766493.2
(22) Anmeldetag: 17.09.2014
(51) Int. Cl.: F16H 59/08, G05G 1/08

(54) **VORRICHTUNG ZUM VERSTELLEN EINES BEDIENELEMENTS EINES AUTOMATIKGETRIEBES EINES FAHRZEUGS IN EINE PARKPOSITION, VERFAHREN ZUM BETREIBEN EINER DERARTIGEN VORRICHTUNG UND SCHALTVORRICHTUNG ZUM SCHALTEN EINES AUTOMATIKGETRIEBES EINES FAHRZEUGS**
DEVICE FOR MOVING AN OPERATING ELEMENT OF AN AUTOMATIC TRANSMISSION OF A VEHICLE INTO A PARK POSITION, METHOD FOR OPERATING SUCH A DEVICE, AND SHIFTING DEVICE FOR SHIFTING AN AUTOMATIC TRANSMISSION OF A VEHICLE
DISPOSITIF DE DÉPLACEMENT D'UN ÉLÉMENT DE RÉGLAGE D'UNE BOÎTE DE VITESSES AUTOMATIQUE D'UN VÉHICULE DANS UNE POSITION DE STATIONNEMENT, PROCÉDÉ DE FONCTIONNEMENT D'UN TEL DISPOSITIF ET DISPOSITIF DE COMMUTATION D'UNE BOÎTE DE VITESSES AUTOMATIQUE D'UN VÉHICULE

(30) Priorität: 17.10.2013 DE 102013221041
(43) Veröffentlichungstag der Anmeldung: 24.08.2016
(73) Patentinhaber: ZF Friedrichshafen AG, 88046 Friedrichshafen (DE); Lemförder-Electronic GmbH, 32339 Espelkamp (DE)
(72) Erfinder: RAKE, Ludger, 49439 Steinfeld (DE); GIEFER, Andreas, 49448 Lemfoerde (DE); ROSENTRETER, Sascha, 32339 Espelkamp (DE); HARTRAMPF, Ralf, 49419 Wagenfeld (DE)
(86) Internationale Anmeldenummer: PCT/EP2014/069764
(87) Internationale Veröffentlichungsnummer: WO 2015/055370

(56) Entgegenhaltungen:
- WO-A1-2006/021198
- WO-A1-2012/090954
- WO-A2-2013/123375
- DE-A1-102006 007 600
- KR-A- 20100 090 826
- US-A1- 2006 037 424

## Beschreibung

Die vorliegende Erfindung bezieht sich auf eine Vorrichtung zum Verstellen eines Bedienelements eines Automatikgetriebes eines Fahrzeugs in eine Parkposition, ein Verfahren zum Betreiben einer Vorrichtung zum Verstellen eines Bedienelements eines Automatikgetriebes eines Fahrzeugs in eine Parkposition und eine Schaltvorrichtung zum Schalten eines Automatikgetriebes eines Fahrzeugs.

Im Fahrzeugbereich sind Schaltbetätigungen für Automatikgetriebe mit multistabilen Schaltstellungen wie z. B. P, R, N, D bekannt und teilweise auch mit einer sogenannten "AutoP"-Funktion, d. h., einer automatischen getriebeseitigen Parksperre, ausgerüstet. Hier wird, wenn im Getriebe die Parksperre eingelegt wurde, auch umgehend an der Schaltbetätigung die P-Position mittels eines Aktors eingelegt. Bei der Rückstellung wird z. B. der Schalthebel bzw. Drehknauf der Schaltbetätigung und damit der Rastierstift fixiert und dann die Rastierung über den Rastierstift mittels eines Elektromotors in die P-Position zurückgedreht. Anschließend wird die Fixierung des Schalthebels aufgehoben und der Fahrer kann aus der neuen P-Position in jede Schaltstellung, z. B. R, N, D schalten.

Die DE 10 2006 007 600 A1 offenbart einen Drehsteller für elektrische oder elektronische Geräte in einem Kraftfahrzeug.

Die DE 102004041087 A1, welche alle Merkmale des Oberbegriffs des Anspruchs 1 und des Anspruchs 10 zeigt, offenbart eine Betätigungseinrichtung für ein shiftby-wire-Fahrzeuggetriebe, wobei die Betätigungseinrichtung umfasst eine Drehknauf, mit zumindest zwei Schaltstellungen. Die Drehknauf ist für sich genommen unbegrenzt rotierbar, wobei die Betätigungseinrichtung zumindest eine gesteuert verstellbare Anschlageinrichtung zur Begrenzung des Drehwinkels des Betätigungselements umfasst. Hierdurch wird eine Betätigungseinrichtung geschaffen, die eine intuitive, sichere und fehlerfreie Betätigung auch komplexer technischer Systeme ermöglicht, ähnlich wie dies beispielsweise bei diskrete Rastpositionen aufweisenden, mechanischen oder elektromechanischen Betätigungselementen der Fall ist. Gleichzeitig wird eine eindeutige, intuitiv erfassbare, insbesondere taktile Rückmeldung des Systemzustands realisiert.

Vor diesem Hintergrund schafft die vorliegende Erfindung eine verbesserte Vorrichtung zum Verstellen eines Bedienelements eines Automatikgetriebes eines Fahrzeugs in eine Parkposition, ein verbessertes Verfahren zum Betreiben einer Vorrichtung zum Verstellen eines Bedienelements eines Automatikgetriebes eines Fahrzeugs in eine Parkposition und eine verbesserte Schaltvorrichtung zum Schalten eines Automatikgetriebes eines Fahrzeugs.

Die Ergänzung einer Automatikgetriebe-Schaltvorrichtung um einen Rückstellring, der insbesondere durch einen Steuernocken zum geeigneten Bewegen des Rastierstifts gekennzeichnet ist, ermöglicht eine Entkoppelung von Rastierstift und Rastierung bei einer Rückstellung des Schalthebels aus einer AutoP-Funktion in eine Parkposition.

Da basierend auf der Entkoppelung der Rastierstift nicht mehr mit der Rastierung im Eingriff steht, kann die Rückstellung des Schalthebels ohne störende Rastiergeräusche erfolgen. Außerdem brauchen aufgrund des beweglichen Rastierstifts bei der Rückstellung keine Rastiermomente mehr überwunden zu werden. So kann das Drehmoment bzw. Rückstellmoment vom Aktor kostensparend reduziert werden.

Eine Vorrichtung zum Verstellen eines Bedienelements eines Automatikgetriebes eines Fahrzeugs in eine Parkposition umfasst einen direkt mit dem Bedienelement gekoppelten drehbar gelagerten Rastierkamm mit einem Anschlagelement, wobei der Rastierkamm eine durch eine Mehrzahl von kammartig angeordneten Erhebungen gekennzeichnete Rastierkontur aufweist, Rastierstift, der ausgebildet ist, um in einer ersten Position den Rastierkamm zu fixieren und in einer zweiten Position den Rastierkamm für eine Drehbewegung freizugeben, und einen drehbar gelagerten Stellring mit einem Steuernocken und einer Nase, wobei der Steuernocken ausgeformt ist, um bei einer Drehbewegung des Stellrings den Rastierstift aus der ersten Position in die zweite Position zu bewegen, und die Nase ausgeformt ist, um bei der Drehbewegung des Stellrings das Anschlagelement mitzunehmen, um den Rastierkamm zum Verstellen des Bedienelements in die Parkposition zu drehen. Dabei kann der Rastierkamm so weit gedreht werden, dass das Bedienelement in die Parkposition verstellt wird.

Bei der Vorrichtung kann es sich um ein Gerät oder einen Teil eines Geräts des Fahrzeugs handeln. Bei dem Fahrzeug kann es sich um ein straßengebundenes Fahrzeug wie einen Personenkraftwagen oder einen Lastkraftwagen handeln. Bei dem Bedienelement kann es sich um einen Ring oder Schalthebel des Automatikgetriebes handeln, der beispielsweise von einem Fahrer des Fahrzeugs mit der Hand bedient werden kann, um unterschiedliche Gänge des Automatikgetriebes einzustellen. Entsprechend kann mit Einstellen der Parkposition am Bedienelement das Automatikgetriebe beispielsweise gesperrt werden, um z. B. ein Wegrollen des Fahrzeugs zu verhindern. Darüber hinaus kann das Bedienelement noch weitere mögliche Positionen wie D für Fahren, R für Rückwärtsfahren und N für die Schaltung des Getriebes in den Leerlauf aufweisen, die manuell vom Fahrer durch Drehen oder Schieben bzw. des Bedienelements eingestellt werden können und über die das Getriebe auf die gewünschte Weise geschaltet werden kann. Der Rastierkamm dient zur Übertragung einer Betätigung des Bedienelements an das Automatikgetriebe und kann über mechanische Verbindungselemente mit dem Bedienelement so gekoppelt sein, dass eine Bewegung des Bedienelements eine gleichförmige, parallel verlaufende Bewegung bzw. Drehung des Rastierkamms bedingt und umgekehrt eine Drehung des Rastierkamms eine entsprechende Drehung des Bedienelements bedingt. Der Rastierkamm kann insbesondere bei einer Ausführung des Bedienelements in Form eines Drehknaufs ringförmig ausgebildet und parallel zu einer Drehebene des Bedienelements angeordnet sein. Der Rastierkamm weist eine durch eine Mehrzahl von kammartig angeordneten Erhebungen gekennzeichnete umlaufende Rastierkontur auf, über die in Verbindung mit dem Rastierstift eine Bewegung des Bedienelements in eine Schaltstellung des Automatikgetriebes umgesetzt werden kann. Das Anschlagelement kann zwischen Erhebungen des Rastierkamms angeordnet sein und eine senkrecht zu einer Drehebene des Rastierkamms verlaufende Anschlagfläche aufweisen. Der Rastierstift kann ausgebildet sein, um in der ersten Position den Rastierkamm durch Eingreifen in die Rastierkontur zu fixieren und in der zweiten Position den Rastierkamm durch eine Herausbewegung aus der Rastierkontur freizugeben. Der Stellring kann als eine Scheibe mit zentraler Bohrung ausgeformt sein. Der Stellring kann parallel zu dem Rastierkamm in der Vorrichtung angeordnet sein. Der Steuernocken des Stellrings kann an einer Außenkontur des Stellrings in Form eines gerundeten Vorsprungs ausgeformt sein, während die Nase des Stellrings an einer Innenkontur des Stellrings ausgeformt sein kann. Die Nase kann insbesondere eine Konterfläche zum Anschlagen an die Anschlagfläche des Anschlagelements und Bildung eines Koppelpunktes zwischen dem Stellring und dem Rastierkamm aufweisen. Steuernocken und Nase können einstückig mit dem Stellring gebildet sein.

Gemäß einer Ausführungsform kann die Vorrichtung ferner ein mit dem Rastierstift verbundenes Federelement aufweisen. Entsprechend kann der Steuernocken ausgeformt sein, um den Rastierstift entgegen einer Kraft des Federelements aus der ersten Position in die zweite Position zu bewegen. Das Federelement kann ausgebildet sein, um den Rastierstift aus der zweiten Position in die erste Position zurückzubewegen. Diese Ausführungsform bietet eine einfache, robuste und kostengünstige Möglichkeit, um den Rastierstift zwischen den zwei Positionen zu bewegen.

Beispielsweise kann die Vorrichtung so aufgebaut sein, dass der Rastierkamm zwischen dem Stellring und dem Bedienelement angeordnet ist und der Rastierstift radial bezüglich des Rastierkamms und des Stellrings angeordnet und ferner ausgebildet ist, um in radialer Richtung bezüglich des Rastierkamms und des Stellrings zwischen der ersten Position und der zweiten Position bewegt zu werden. Mit der sandwichartigen Anordnung des Rastierkamms zwischen dem Stellring und dem Bedienelement kann jede Drehung des Stellrings vorteilhafterweise möglichst direkt und verlustarm auf das Bedienelement übertragen werden. Die radiale Anordnung des Rastierstifts gegenüber dem Rastierkamm kann so gestaltet sein, dass der Rastierstift den kreisrund ausgebildeten Rastierkamm an zwei diametral gegenüberliegenden Positionen durchgreift. Diese Anordnung des Rastierstifts gegenüber dem Rastierkamm ist besonders funktional, insbesondere, da der Rastierkamm so an zwei Stellen fixiert bzw. freigegeben werden kann.

Gemäß einer weiteren Ausführungsform kann der Rastierstift einen Fortsatz aufweisen und ausgebildet sein, um bei der Drehbewegung des Stellrings über eine Aufnahme des Fortsatzes auf den Steuernocken aus der ersten Position in die zweite Position bewegt zu werden. Diese Ausführungsform bietet eine besonders einfach und kostengünstig umzusetzende Möglichkeit, die Drehbewegung des Stellrings auf die Linearbewegung des Rastierstifts zu übertragen.

Insbesondere können die Nase und der Steuernocken zur Bildung eines Vorlaufs des Steuernockens gegenüber der Nase um einen vorbestimmten Winkel versetzt an dem Stellring ausgeformt sein. So kann bei der Drehbewegung des Stellrings zuerst mittels des Nockens der Rastierstift aus der ersten Position in die zweite Position bewegt werden und anschließend das Anschlagelement von der Nase in der Drehrichtung mitgenommen werden. Ein so auf einfache Weise gestalteter Vorlauf des Steuernockens gegenüber der Nase ermöglicht einen reibungslosen Funktionsablauf der erfindungsgemäßen Vorrichtung.

Der Steuernocken kann beispielsweise durch einen Abschnitt des Stellrings gebildet sein, der durch eine größere radiale Ausdehnung des Stellrings als in einem Restbereich des Stellrings gekennzeichnet ist. Dabei kann bezogen auf eine Richtung der Drehbewegung des Stellrings ein Anfangsbereich des Steuernockens durch einen abgeschrägt ausgeformten ersten Übergang zwischen dem Abschnitt und dem Restbereich gekennzeichnet sein und ein Endbereich des Steuernockens durch einen abgestuft ausgeformten zweiten Übergang zwischen Abschnitt und dem Restbereich gekennzeichnet sein. So kann auf einfache Weise der Übergang zu dem Steuernocken graduell ausgebildet sein, während der Übergang vom Steuernocken zum Restbereich des Stellrings abrupt ausgebildet sein. Mit dieser vorteilhaften Ausformung des Steuernockens kann über den abgeschrägten Anfangsbereich der Rastierstift geräuscharm und ohne die Gefahr von Verkantungen von dem Steuernocken aufgenommen und in die zweite Position bewegt werden. Über den stufenartigen Endbereich des Steuernockens kann der Rastierstift besonders sicher und schnell mittels der Federkraft in die erste Position zurückschnellen und damit den Rastierkamm wieder sicher fixieren.

Gemäß einer weiteren Ausführungsform kann die Vorrichtung ferner ein den Stellring mit einem Aktor koppelndes Koppelelement aufweisen. Das Koppelelement kann ausgebildet sein, um ein Drehmoment des Aktors auf den Stellring zu übertragen, um die Drehbewegung des Stellrings zu erzeugen. Das Koppelelement kann beispielsweise als ein Zahnrad ausgeführt sein, das in paralleler Ebene angrenzend an den Stellring angeordnet sein kann und direkt oder indirekt mit diesem gekoppelt sein kann. Bei dem Aktor kann es sich z. B. um einen Elektromotor handeln. Mit dieser Ausführungsform kann eine Bewegung des Elektromotors auf einfache und kostengünstige Weise in eine Bewegung des Stellrings umgesetzt werden.

Selbstverständlich kann der Stellring zumindest einen weiteren Steuernocken und zumindest eine weitere Nase aufweisen. Beispielsweise kann ein weiterer Steuernocken dem Steuernocken diametral gegenüberliegend an dem Stellring angeordnet sein und ebenso eine weitere Nase der Nase diametral gegenüberliegend an dem Stellring angeordnet sein. Mit dieser Ausführungsform kann der Rastierkamm vorteilhafterweise noch gleichmäßiger und leichtgängiger und vor allem mit weniger Zeit- und Energieaufwand um ein erforderliches Maß zurückgedreht werden.

Eine Schaltvorrichtung zum Schalten eines Automatikgetriebes eines Fahrzeugs weist die folgenden Merkmale auf:
ein Bedienelement, das ausgebildet ist, um zwischen einer Parkposition des Automatikgetriebes und zumindest einer Fahrposition des Automatikgetriebes verstellt zu werden; und
eine Vorrichtung zum Verstellen des Bedienelements gemäß einer der vorangegangenen Ausführungsformen, wobei der Rastierkamm der Vorrichtung ausgebildet ist, um direkt mit dem Bedienelement koppelbar oder gekoppelt zu sein.

Das Bedienelement kann z. B. als ein Drehknauf ausgeführt und ausgebildet sein, um von einem Fahrer des Fahrzeugs bedient zu werden. Dazu kann das Bedienelement an unterschiedlichen Positionen Markierungen aufweisen, die dem Fahrer anzeigen, wie weit bzw. in welche Richtung das Bedienelement zum Einstellen der unterschiedlichen Gänge zu drehen ist bzw. ihm anzeigen, in welcher Stellung sich das Automatikgetriebe des Fahrzeugs aktuell befindet. So kann die Parkposition mit "P" gekennzeichnet sein. Als weitere Positionen können "D" für eine Getriebestellung "Fahren", "R" für eine Getriebestellung "Rückwärtsfahren" und "N" für den Leerlauf auf der Bedienvorrichtung gekennzeichnet sein.

Ein Verfahren zum Betreiben einer Vorrichtung zum Verstellen eines Bedienelements eines Automatikgetriebes eines Fahrzeugs in eine Parkposition, wobei die Vorrichtung einen direkt mit dem Bedienelement gekoppelten drehbar gelagerten Rastierkamm mit einem Anschlagelement, wobei der Rastierkamm eine durch eine Mehrzahl von kammartig angeordneten Erhebungen gekennzeichnete Rastierkontur aufweist, einen Rastierstift, der ausgebildet ist, um in einer ersten Position den Rastierkamm zu fixieren und in einer zweiten Position den Rastierkamm für eine Drehbewegung freizugeben, und einen drehbar gelagerten Stellring mit einem Steuernocken und einer Nase umfasst, weist den folgenden Schritt auf:
Drehen des Stellrings, um mittels des Steuernockens den Rastierstift aus der ersten Position in die zweite Position zu bewegen und mittels der Nase das Anschlagelement mitzunehmen, um den Rastierkamm so weit zu drehen, dass das Bedienelement in die Parkposition verstellt wird.

Das Verfahren kann vorteilhaft unter Verwendung der genannten Vorrichtung umgesetzt werden.

Die Erfindung wird anhand der beigefügten Zeichnungen beispielhaft näher erläutert. Es zeigen:
- Fig. 1: eine schematische Darstellung einer Schaltvorrichtung zum Schalten eines Automatikgetriebes eines Fahrzeugs, gemäß einem Ausführungsbeispiel der vorliegenden Erfindung;
- Fig. 2: eine perspektivische Darstellung der Schaltvorrichtung aus Fig. 1, gemäß einem Ausführungsbeispiel der vorliegenden Erfindung;
- Fig. 3: eine perspektivische Untenansicht der Schaltvorrichtung aus Fig. 2 mit nicht zurückgezogenem Rastierstift, gemäß einem Ausführungsbeispiel der vorliegenden Erfindung;
- Fig. 4: eine perspektivische Untenansicht der Schaltvorrichtung aus Fig. 2 mit zurückgezogenem Rastierstift, gemäß einem Ausführungsbeispiel der vorliegenden Erfindung;
- Fig. 5: eine perspektivische Draufsicht der Schaltvorrichtung aus Fig. 2 mit nicht zurückgezogenem Rastierstift, gemäß einem Ausführungsbeispiel der vorliegenden Erfindung;
- Fig. 6: eine perspektivische Draufsicht der Schaltvorrichtung aus Fig. 2 mit zurückgezogenem Rastierstift, gemäß einem Ausführungsbeispiel der vorliegenden Erfindung; und
- Fig. 7: ein Ablaufdiagramm eines Verfahrens zum Betreiben einer Vorrichtung zum Verstellen eines Bedienelements eines Automatikgetriebes eines Fahrzeugs in eine Parkposition, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

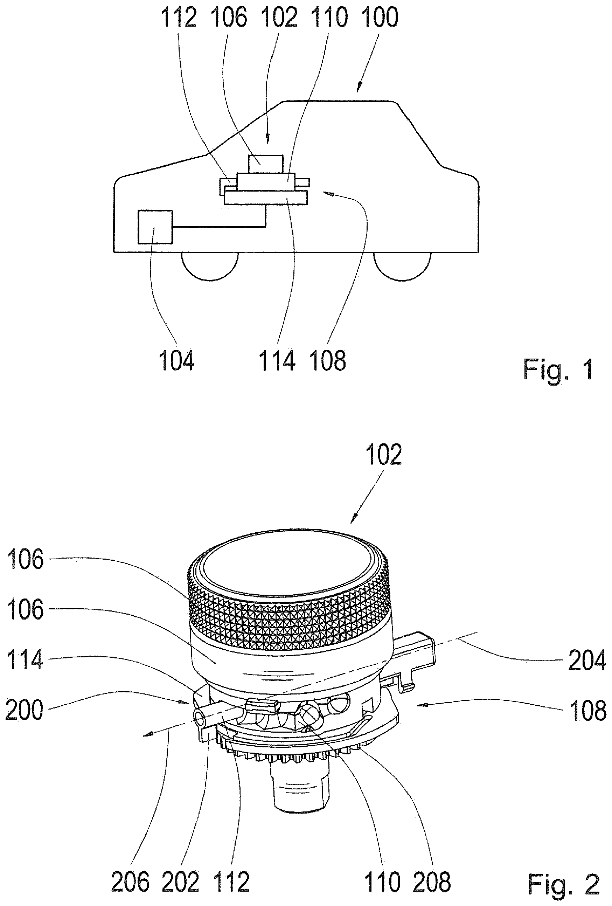

Fig. 1 zeigt anhand einer schematischen Darstellung ein Fahrzeug 100 mit einer Schaltvorrichtung 102 gemäß einem Ausführungsbeispiel der vorliegenden Erfindung. Die Schaltvorrichtung 102 ist zum Schalten eines Automatikgetriebes 104 des Fahrzeugs 100 ausgebildet und setzt sich aus einem Bedienelement 106 und einer Vorrichtung 108 zum Verstellen des Bedienelements 106 zusammen. Die Vorrichtung 108 ist mit dem Bedienelement 106 gekoppelt.

Dadurch kann zum einen eine Betätigung des Bedienelements 106 durch einen Fahrer des Fahrzeugs an das Automatikgetriebe 104 übertragen werden. Zum anderen kann das Bedienelement 106 in eine Parkposition verstellt werden, wenn das Automatikgetriebe 104 einen AutoP-Zustand einnimmt. Auf diese Weise kann ein Zustand des Automatikgetriebes 104 in Einklang mit der Stellung des Bedienelements 106 gebracht werden.

Dazu umfasst die Vorrichtung 108 einen direkt mit dem Bedienelement 106 gekoppelten drehbar gelagerten Rastierkamm 110 mit einem (hier nicht gezeigten) Anschlagelement, einen Rastierstift 112 sowie einen drehbar gelagerten Stellring 114. Der Rastierstift 112 ist federbelastet und ausgebildet, um in einer ersten Position den Rastierkamm 110 zu fixieren und in einer zweiten Position den Rastierkamm 110 für eine Drehbewegung freizugeben. Die Verschiebung des Rastierstifts 112 zwischen der ersten und der zweiten Position wird über eine Drehung des Stellrings 114 herbeigeführt, der dafür über einen (hier nicht gezeigten) Steuernocken verfügt. Über eine ebenfalls in der Darstellung in Fig. 1 nicht gezeigte Nase des Stellrings 114 wird nach der Positionsverschiebung des Rastierstifts 112 der Rastierkamm 110 am Anschlagelement mitgenommen und so weit gedreht, dass das Bedienelement 106 in die Parkposition verstellt wird.

Fig. 2 zeigt in einer perspektivischen Darstellung ein Ausführungsbeispiel der Schaltvorrichtung 102 in größerer Detailtreue. Das mit der Vorrichtung 108 gekoppelte Bedienelement 106 ist ausgebildet, um von einem Fahrer des Fahrzeugs, in dem die Schaltvorrichtung 102 installiert ist, gehandhabt zu werden, um unterschiedliche Gänge des mit der Schaltvorrichtung 102 gekoppelten Automatikgetriebes des Fahrzeugs einzustellen. Bei dem in der Darstellung in Fig. 2 gezeigten Ausführungsbeispiel der Schaltvorrichtung 102 ist das Bedienelement 106 als ein Drehknauf ausgeführt und weist entsprechend eine Zylinderform auf. Entsprechend der Ausführung als Drehknauf wird ein Schaltvorgang der Schaltvorrichtung 102 durch Drehen des Bedienelements 106 ausgeführt. Dazu weist ein Abschnitt der zylinderförmigen Wand des Bedienelements 106 zum besseren Greifen eine geriffelte Oberfläche auf. Um dem Bediener das Schalten zu erleichtern, zeigt das Bedienelement 106 in der Regel Buchstabensymbole, die z. B. an einer Oberfläche des Bedienelements 106 für den Bediener gut sichtbar angeordnet sein können. So kann der Drehknauf 106 an verschiedenen Positionen z. B. die Symbole "P" für Parken, "D" für Fahren, "R" für Rückwärtsfahren und "N" für Leerlauf zeigen. In der Darstellung der Schaltvorrichtung 102 in Fig. 2 wurden diese Symbole aus Gründen der Übersichtlichkeit wegelassen. Ziel der hier vorgestellten erfindungsgemäßen Vorrichtung 108 ist es, eine Parksperre des mit der Schaltvorrichtung 102 verbundenen Automatikgetriebes auf das Bedienelement 106 zu übertragen, indem dieses aus einer beliebigen Gangposition in die Position P für Parken verstellt wird.

Wie die Darstellung in Fig. 2 zeigt, ist der Rastierkamm 110 angrenzend an das Bedienelement 106 in einer zu einer Ebene des Bedienelements parallelen Ebene angeordnet und direkt mit dem Bedienelement 106 gekoppelt. Der Rastierkamm 110 weist eine Zylinder- oder Ringform auf und ist im Umfang geringfügig kleiner als das Bedienelement 106. Der Rastierkamm 110 ist drehbar in der Vorrichtung 108 gelagert. Eine in Fig. 2 deutliche sichtbare Rastierkonturierung des Rastierkamms 110 ermöglicht die exakte Einstellung der Gänge am Bedienelement 106. Der Rastierstift 112 ist radial gegenüber dem Rastierkamm 110 angeordnet und durchgreift den Rastierkamm 110 an zwei diametral gegenüberliegenden Positionen. Der Rastierstift 112 ist ausgebildet, um in einer ersten Position den Rastierkamm 110 zu fixieren und in einer zweiten Position den Rastierkamm 110 für eine Drehbewegung freizugeben. Der Rastierstift 112 ist mit einem in der Darstellung in Fig. 2 nicht gezeigten Federelement der Vorrichtung 108 verbunden, das ausgebildet ist, um mittels Federkraft den Rastierstift 112 in der ersten Position zu halten oder in diese zu bewegen. Angrenzend an den Rastierkamm 110 und in einer zu der Ebene des Rastierkamms 110 parallelen Ebene weist die Vorrichtung 108 den ebenfalls drehbar gelagerten Stellring 114 auf. Über einen in der Darstellung in Fig. 2 im Anschnitt sichtbaren Steuernocken 200 des Stellrings 114 wird bei einer Drehbewegung des Stellrings 114 der Rastierstift 112 entgegen einer Federkraft des den Rastierstift 112 belastenden Federelements in die zweite Position verbracht, in der der Rastierstift 112 den Rastierkamm 110 für die Drehbewegung freigibt. Dazu weist der Rastierstift 112 einen Fortsatz 202 auf, der an einem Ende des Rastierstifts 112 angeordnet ist und sich quer zu einer Erstreckungsrichtung des Rastierstifts 112 in die Drehebene des Stellrings 114 hinein erstreckt. So wird bei einer Drehbewegung des Stellrings der Rastierstift 112 über den Fortsatz 202 von dem Steuernocken 200 aufgenommen und radial bzw. entlang einer mittels einer Strichlinie in der Darstellung in Fig. 2 gekennzeichneten Haupterstreckungsrichtung 204 des Rastierstifts 112 bewegt. Der Fortsatz 202 ist bei dem in der Darstellung gezeigten Ausführungsbeispiel einstückig mit dem Rastierstift 112 gebildet. Bei dem in Fig. 2 gezeigten Zustandsbild der Schaltvorrichtung 102 befindet sich der Rastierstift 112 in der ersten Position und würde infolge einer Drehung des Stellrings 114 mit Aufnahme durch den Nocken 200 in einer mittels eines Pfeils gekennzeichneten Richtung 206 entgegen der Federkraft in die zweite Position bewegt werden.

Wie die Darstellung in Fig. 2 zeigt, weist die Vorrichtung 108 an ihrem unteren Ende ein Koppelelement 208 auf, das ausgebildet ist, um ein Drehmoment eines Aktors zum Bewegen des Bedienelements 106 auf den Stellring zu übertragen, um die Drehbewegung des Stellrings zu erzeugen. Das Koppelelement 208 ist hier als ein Zahnrad ausgebildet, das mit einer Hauptseite fest an dem Stellring 114 angeordnet ist. An einer der Hauptseite gegenüberliegenden freien Hauptseite kann das Koppelelement 208 z. B. mit einem Elektromotor verbunden sein, dessen Drehmoment über das Koppelelement auf den Stellring und damit letztendlich das Bedienelement übertragen wird.

Wie bereits erläutert, ist der Drehknauf bzw. Schalthebel 106 drehbar gelagert und direkt mit der dem Rastierkamm bzw. der Rastierung 110 verbunden. Der federbelastete Rastierstift 112 ist ortsfest in einem hier nicht gezeigten Gehäuse der Vorrichtung 108 angeordnet. Bei AutoP wird mittels des mit einem Elektromotor oder sonstigen Aktor verbundenen Koppelelements 208 der Schalthebel 106 einschließlich der Rastierung 110 indirekt über den Rückstellring 114 zurückgedreht. Auf den genauen Funktionsablauf zum Zurückdrehen des Bedienelements 106 wird anhand der nachfolgenden Figuren ausführlich eingegangen.

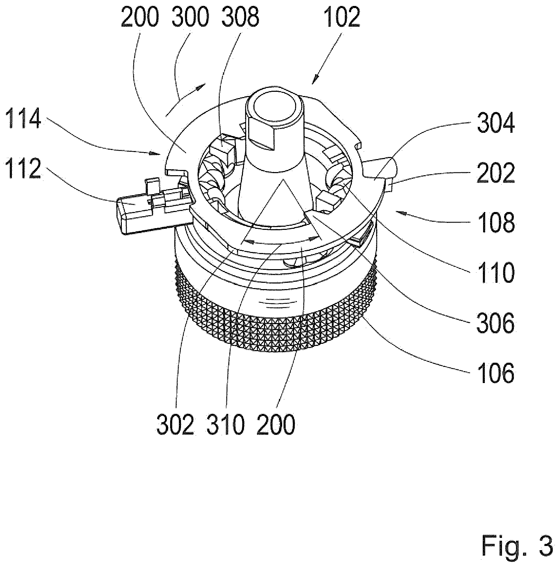

Fig. 3 zeigt die Schaltvorrichtung 102 aus Fig. 2 in einer perspektivischen Untenansicht. Das Koppelelement wurde hier weggelassen, sodass der für die Funktionalität der erfindungsgemäßen Vorrichtung 108 bedeutsame Stellring 114 sowie auch der Rastierkamm 110 hier gut zu sehen sind. Wie die Darstellung in Fig. 3 zeigt, ist der Stellring 114 als eine Scheibe mit einem großen zentralen Durchgangsloch ausgeformt.

Der Steuernocken 200 ist in einer Außenkontur des Stellrings 114 durch einen Abschnitt gebildet, der durch eine größere radiale Ausdehnung des Stellrings 114 als in einem Restbereich des Stellrings 114 gekennzeichnet ist. Bezogen auf eine mittels eines Pfeils gekennzeichnete Drehrichtung 300 des Stellrings 114 weist der Steuernocken 200 unterschiedliche ausgeformte Anfangs- und Endbereiche auf. Wie es aus der Darstellung gut ersichtlich ist, ist ein Anfangsbereich 302 des Steuernockens 200 abgeschrägt ausgeformt, während ein Endbereich 304 des Steuernockens 200 in einer abrupten Stufe in einen den Steuernocken 200 nicht aufweisenden Restbereich des Stellrings 114 übergeht. Wie die Darstellung in Fig. 3 deutlich zeigt, weist das hier gezeigte Ausführungsbeispiel der Schaltvorrichtung 102 einen weiteren Steuernocken 200 auf. Die beiden Steuernocken 200 sind identisch ausgeformt und an dem Stellring 114 diametral gegenüberliegend angeordnet.

Aus der Darstellung in Fig. 3 ist ferner eine an einer Innenkontur des Stellrings 114 ausgeformte Nase 306 des Stellrings 114 ersichtlich. Die Nase 306 ist ausgebildet, um bei der Drehbewegung 300 des Stellrings 114 an ein hier auch sichtbares Anschlagelement 308 des Rastierkamms 110 anzuschlagen und dieses im Fortlauf der Drehbewegung 300 mitzunehmen und so den Rastierkamm 110 zu drehen. Nase 306 und Steuernocken 200 des Stellrings 114 sind einstückig mit dem Stellring 114 gebildet. Das Anschlagelement 308 ist rechteckig geformt und zwischen die gerundete Rastierkontur des Rastierkamms 110 eingesetzt. Das Anschlagelement 308 ist einstückig mit dem Rastierkamm 110 gebildet. Bei dem in Fig. 3 gezeigten Ausführungsbeispiel weist der Rastierkamm 110 ein weiteres Anschlagelement 308 auf, das dem Anschlagelement 308 diametral gegenüberliegend an der Rastierkontur angeordnet ist und identisch ausgeformt ist.

Aus der Darstellung in Fig. 3 ist gut ersichtlich, dass der Steuernocken 200 und die Nase 306 zur Bildung eines Vorlaufs 310 des Steuernockens 200 gegenüber der Nase 306 um einen vorbestimmten Winkel versetzt an dem Stellring 114 ausgeformt sind. Über den Vorlauf 310 wird gewährleistet, dass der Rastierstift 112 den Rastierkamm 110 erst vollständig freigegeben hat, bevor der Rastierkamm 110 mittels der Nase 306 des Stellrings 114 in eine Drehung versetzt wird.

In der Darstellung in Fig. 3 ist ein Funktionszustand der Schaltvorrichtung 102 gezeigt, in der sich der Rastierstift 112 in der ersten Position befindet, also nicht zurückgezogen ist. Der Fortsatz 202 des Rastierstifts 112 liegt an dem nicht die Steuernocken 200 aufweisenden Restbereich des Stellrings 114 an, wird mittels Federkraft in der ersten Position gehalten und fixiert den Rastierkamm 110.

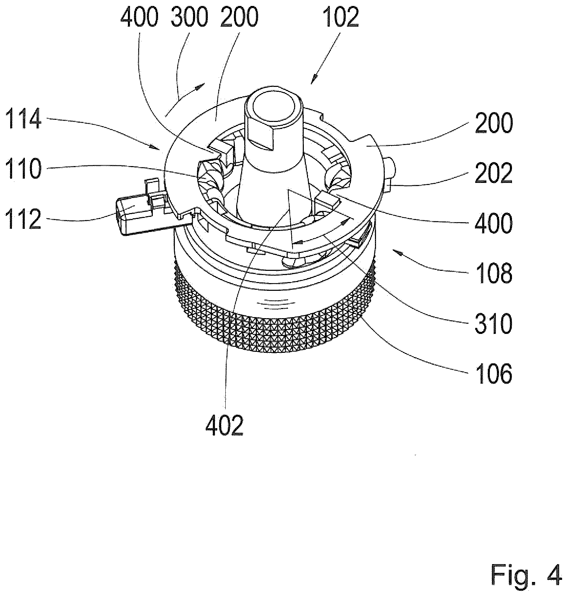

Fig. 4 zeigt in einer weiteren Untenansicht die Schaltvorrichtung 102 in einem Funktionszustand, in dem sich der Rastierstift 112 in der zweiten Position befindet. Basierend auf einer Weiterdrehung des Stellrings 114 in der Drehrichtung 300 hat einer der beiden Steuernocken 200 den Fortsatz 202 des Rastierstifts 112 aufgenommen und diesen somit in die zweite Position bewegt, in der der Rastierstift 112 den Rastierkamm 110 zur Drehung freigibt. Infolge der Weiterdrehung des Stellrings 114 um eine Länge des Vorlaufs 310 hat die Nase 306 sowie eine gleich ausgeformte und der Nase 306 gegenüberliegende weitere Nase 306 je eines der Anschlagelemente 308 des Rastierkamms 110 erreicht. Je eine plane Anschlagfläche des jeweiligen Anschlagelements 308 und eine ebenfalls plane jeweilige Konterfläche der jeweiligen Nase 306 liegen aneinander an und bilden damit Koppelpunkte 400 zur Übertragung des Drehmoments von dem Stellring 114 auf den Schalthebel 106. Damit stehen beim Zurückdrehen die Rastierung 110 und der Rückstellring 114 an den Koppelpunkten 400 im Eingriff. Da die am Stellring 114 angeordneten Steuernocken 200 den federbelasteten Rastierstift 112 vor dem Zurückdrehen der Rastierung 110 zurückziehen, steht der Rastierstift 112 nicht mehr mit der Rastierung 110 im Eingriff. Durch die Entkoppelung von Rastierstift 112 und Rastierung 110 erfolgt die Rückstellung des Schalthebels 106 ohne störende Rastiergeräusche.

Wie die Darstellung in Fig. 4 zeigt, bildet der Vorlauf 310 der Steuernocke 200 des Rückstellringes 114 bezogen auf ein Zentrum der Schaltvorrichtung 102 einen Winkel 402 von x°, beispielsweise zwischen 30° und 50°, (die Länge des Vorlaufs ist spezifikationsabhängig) zum Koppelpunkt 400. Dadurch erfolgt bei AutoP zuerst die Entkoppelung von Rastierstift 112 und Rastierung 110. Beim Weiterdrehen des Rückstellringes 114 wird dann die Rastierung 110 am Koppelpunkt 400 mitgenommen und nach P zurückgedreht.

Nachdem der Schalthebel 106 die P-Position erreicht hat, wird der Rückstellring 114 in seine Ausgangsstellung zurückgeführt. Hierbei wird der Rastierstift 112 wieder mit der Rastierung 110 in Eingriff gebracht.

Der Schalthebel 106 kann bei der hierin vorgestellten Drehschaltung 102 mit entkoppelter Rastierung 110 aus jeder Position, z. B. R, N oder D, nach P zurückgedreht werden.

Gemäß weiteren Ausführungsbeispielen der hier vorgestellten Schaltvorrichtung kann die Anzahl der verwendeten Rastierelemente auch erhöht werden. Durch die gleichzeitige Erhöhung der Anzahl der Schaltnocken 200 am Rückstellring 114 können auch weitere Rastierstifte 112 gleichzeitig bewegt werden.

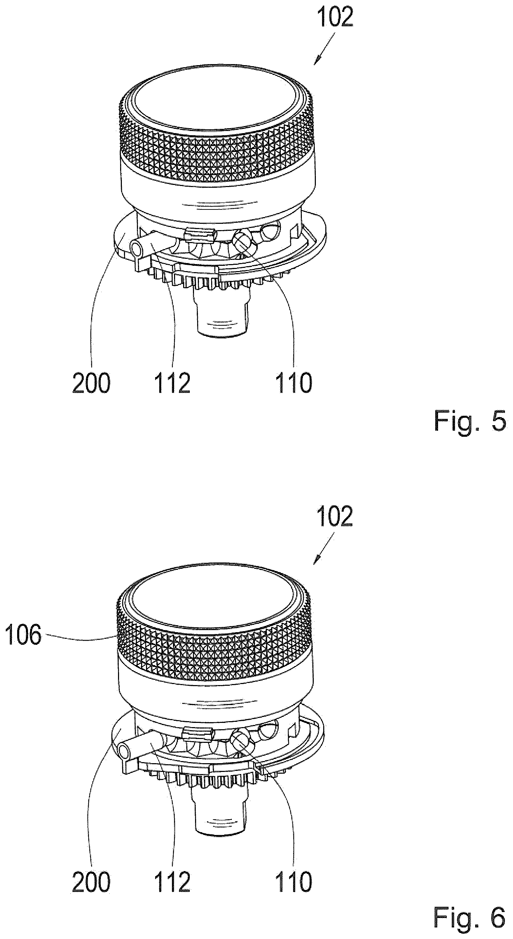

Die Figuren 5 und 6 zeigen die anhand der Figuren 3 und 4 ausführlich erläuterten Funktionszustände der hierin vorgestellten Schaltvorrichtung 102 nochmals in einer perspektivischen Ansicht von oben. So zeigt Fig. 5 einen Funktionszustand der Schaltvorrichtung 102 mit fixierter Rastierung 110. Der Rastierstift 112 sitzt nicht auf der Steuernocke 200 auf und ist somit eingekoppelt und fixiert die Rastierung 110. Fig. 6 zeigt einen Funktionszustand der Schaltvorrichtung 102, in dem der Rastierstift 112 mittels der Steuernocke 200 in die zweite Position gezogen wurde, in der er aus der Rastierung 110 zurückgezogen und damit von ihr entkoppelt ist. Damit ist die Rastierung 110 und damit auch der Schalthebel 106 für eine Drehung freigegeben.

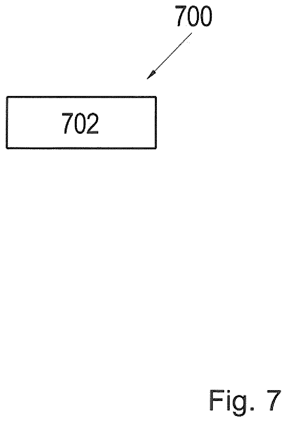

Fig. 7 zeigt ein Ablaufdiagramm eines Ausführungsbeispiels eines Verfahrens 700 zum Betreiben einer Vorrichtung zum Verstellen eines Bedienelements eines Automatikgetriebes eines Fahrzeugs in eine Parkposition. Bei der mittels des Verfahrens 700 zu betreibenden Vorrichtung kann es sich um die anhand der vorangegangenen Figuren erläuterte Vorrichtung handeln, die mit einem Bedienelement einer Automatikschaltung eines Fahrzeugs gekoppelt bzw. koppelbar ist und sich aus einem drehbar gelagerten Rastierkamm mit einem Anschlagelement, einem Rastierstift zum Fixieren bzw. Freigeben des Rastierkamms für eine Drehbewegung und einem drehbar gelagerten Stellring mit einem Steuernocken und einer Nase zusammensetzt. Das Verfahren kann von einem mit der Vorrichtung gekoppelten Steuergerät des Fahrzeugs ausgeführt werden. In einem Schritt 702 wird der Stellring über einen mit der Vorrichtung gekoppelten Aktor in einer vorbestimmten Drehrichtung gedreht, um mittels des Steuernockens den Rastierstift aus einer ersten Position in eine zweite Position zu bewegen und damit den Rastierkamm freizugeben und mittels der Nase so weit zu drehen, dass das Bedienelement in die Parkposition gebracht wird.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 102: Schaltvorrichtung
- 104: Automatikgetriebe
- 106: Bedienelement
- 108: Vorrichtung zum Verstellen des Bedienelements
- 110: Rastierkamm
- 112: Rastierstift
- 114: Stellring
- 200: Steuernocken
- 202: Fortsatz
- 204: Haupterstreckungsrichtung des Rastierstifts
- 206: Richtung der Bewegung des Rastierstifts in die zweite Position
- 208: Koppelelement
- 300: Drehrichtung des Stellrings
- 302: Anfangsbereich des Steuernockens
- 304: Endbereich des Steuernockens
- 306: Nase
- 308: Anschlagelement
- 310: Vorlauf
- 400: Koppelpunkt
- 402: Winkel des Vorlaufs
- 700: Verfahren zum Betreiben einer Vorrichtung zum Verstellen eines Bedienelements
- 702: Schritt des Drehens

## Patentansprüche

1. Vorrichtung (108) zum Verstellen eines Bedienelements (106) eines Automatikgetriebes (104) eines Fahrzeugs (100) in eine Parkposition, wobei die Vorrichtung (108) die folgenden Merkmale aufweist:
einen direkt mit dem Bedienelement (106) gekoppelten drehbar gelagerten Rastierkamm (110) mit einem Anschlagelement (308), wobei der Rastierkamm eine durch eine Mehrzahl von kammartig angeordneten Erhebungen gekennzeichnete umlaufende Rastierkontur aufweist; und
einen Rastierstift (112), der ausgebildet ist, um in einer ersten Position den Rastierkamm (110) zu fixieren und in einer zweiten Position den Rastierkamm (110) für eine Drehbewegung (300) freizugeben;
**dadurch gekennzeichnet, dass** die Vorrichtung (108) die folgenden Merkmale aufweist:
einen drehbar gelagerten Stellring (114) mit einem Steuernocken (200) und einer Nase (306), wobei der Steuernocken (200) ausgeformt ist, um bei einer Drehbewegung (300) des Stellrings (114) den Rastierstift (112) aus der ersten Position in die zweite Position zu bewegen, und die Nase (306) ausgeformt ist, um bei der Drehbewegung (300) des Stellrings (114) das Anschlagelement (308) mitzunehmen, um den Rastierkamm (110) zum Verstellen des Bedienelements (106) in die Parkposition zu drehen.

2. Vorrichtung (108) gemäß Anspruch 1, **dadurch gekennzeichnet, dass** die Vorrichtung (108) ferner ein mit dem Rastierstift (112) verbundenes Federelement aufweist, wobei der Steuernocken (200) ausgeformt ist, um den Rastierstift (112) entgegen einer Kraft des Federelements aus der ersten Position in die zweite Position zu bewegen.

3. Vorrichtung (108) gemäß einem der vorangegangenen Ansprüche, **dadurch gekennzeichnet, dass** der Rastierkamm (110) zwischen dem Stellring (114) und dem Bedienelement (106) angeordnet ist und der Rastierstift (112) radial bezüglich des Rastierkamms (110) und des Stellrings (114) angeordnet ist und ausgebildet ist, um in radialer Richtung (204) bezüglich des Rastierkamms (110) und des Stellrings (114) zwischen der ersten Position und der zweiten Position bewegt zu werden.

4. Vorrichtung (108) gemäß einem der vorangegangenen Ansprüche, **dadurch gekennzeichnet, dass** der Rastierstift (112) einen Fortsatz (202) aufweist und ausgebildet ist, um bei der Drehbewegung (300) des Stellrings (114) über eine Aufnahme des Fortsatzes (202) auf den Steuernocken (200) aus der ersten Position in die zweite Position bewegt zu werden.

5. Vorrichtung (108) gemäß einem der vorangegangenen Ansprüche, **dadurch gekennzeichnet, dass** die Nase (306) und der Steuernocken (200) zur Bildung eines Vorlaufs (310) des Steuernockens (200) gegenüber der Nase (306) um einen vorbestimmten Winkel (402) versetzt an dem Stellring (114) ausgeformt sind.

6. Vorrichtung (108) gemäß einem der vorangegangenen Ansprüche, **dadurch gekennzeichnet, dass** der Steuernocken (200) durch einen Abschnitt des Stellrings (114) gebildet ist, der durch eine größere radiale Ausdehnung des Stellrings (114) als in einem Restbereich des Stellrings (114) gekennzeichnet ist, wobei bezogen auf eine Richtung der Drehbewegung (300) des Stellrings (114) ein Anfangsbereich (302) des Steuernockens (200) durch einen abgeschrägt ausgeformten ersten Übergang zwischen dem Abschnitt und dem Restbereich gekennzeichnet ist und ein Endbereich (304) des Steuernockens (200) durch einen abgestuft ausgeformten zweiten Übergang zwischen Abschnitt und dem Restbereich gekennzeichnet ist.

7. Vorrichtung (108) gemäß einem der vorangegangenen Ansprüche, **dadurch gekennzeichnet, dass** die Vorrichtung (108) ferner ein den Stellring (114) mit einem Aktor koppelndes Koppelelement (208) aufweist, das ausgebildet ist, um ein Drehmoment des Aktors auf den Stellring (114) zu übertragen, um die Drehbewegung (300) des Stellrings (114) zu erzeugen.

8. Vorrichtung (108) gemäß einem der vorangegangenen Ansprüche, **dadurch gekennzeichnet, dass** der Stellring (114) zumindest einen weiteren Steuernocken (200) und zumindest eine weitere Nase (306) aufweist.

9. Schaltvorrichtung (102) zum Schalten eines Automatikgetriebes (104) eines Fahrzeugs (100), wobei die Schaltvorrichtung (102) die folgenden Merkmale aufweist:
ein Bedienelement (106), das ausgebildet ist, um zwischen einer Parkposition des Automatikgetriebes (104) und zumindest einer Fahrposition des Automatikgetriebes (104) verstellt zu werden; und
eine Vorrichtung (108) zum Verstellen des Bedienelements (106) gemäß einem der vorangegangenen Ansprüche, wobei der Rastierkamm (110) der Vorrichtung (108) direkt mit dem Bedienelement (106) gekoppelt ist.

10. Verfahren (700) zum Betreiben einer Vorrichtung (108) zum Verstellen eines Bedienelements (106) eines Automatikgetriebes (104) eines Fahrzeugs (100) in eine Parkposition, wobei die Vorrichtung (108) einen direkt mit dem Bedienelement (106) gekoppelten drehbar gelagerten Rastierkamm (110) mit einem Anschlagelement (308), wobei der Rastierkamm eine durch eine Mehrzahl von kammartig angeordneten Erhebungen gekennzeichnete umlaufende Rastierkontur aufweist, einen Rastierstift (112), der ausgebildet ist, um in einer ersten Position den Rastierkamm (110) zu fixieren und in einer zweiten Position den Rastierkamm (110) für eine Drehbewegung (300) freizugeben, und einen drehbar gelagerten Stellring (114) mit einem Steuernocken (200) und einer Nase (306) aufweist, **dadurch gekennzeichnet, dass** das Verfahren (700) den folgenden Schritt aufweist:
Drehen (702) des Stellrings (114), um mittels des Steuernockens (200) den Rastierstift (112) aus der ersten Position in die zweite Position zu bewegen und mittels der Nase (306) das Anschlagelement (308) mitzunehmen, um den Rastierkamm (110) so weit zu drehen, dass das Bedienelement (106) in die Parkposition verstellt wird.

## Claims

1. Apparatus (108) for adjusting an operating element (106) of an automatic transmission (104) of a vehicle (100) into a park position, the apparatus (108) having the following features:
a rotatably mounted latching crown (110) which is coupled directly to the operating element (106) and has a stop element (308), the latching crown having a circumferential latching contour which is **characterized by** a plurality of elevations which are arranged in a crown-like manner; and
a latching pin (112) which is configured to fix the latching crown (110) in a first position and to release the latching crown (110) for a rotational movement (300) in a second position;
**characterized in that** the apparatus (108) has the following features:
a rotatably mounted adjusting ring (114) with a control cam (200) and a lug (306), the control cam (200) being formed to move the latching pin (112) out of the first position into the second position during a rotational movement (300) of the adjusting ring (114), and the lug (306) being formed to drive the stop element (308) during the rotational movement (300) of the adjusting ring (114), in order to rotate the latching crown (110) into the park position for adjusting the operating element (106).

2. Apparatus (108) according to Claim 1, **characterized in that**, furthermore, the apparatus (108) has a spring element which is connected to the latching pin (112), the control cam (200) being formed to move the latching pin (112) out of the first position into the second position counter to a force of the spring element.

3. Apparatus (108) according to either of the preceding claims, **characterized in that** the latching crown (110) is arranged between the adjusting ring (114) and the operating element (106), and the latching pin (112) is arranged radially with regard to the latching crown (110) and the adjusting ring (114) and is configured to be moved between the first position and the second position in the radial direction (204) with regard to the latching crown (110) and the adjusting ring (114).

4. Apparatus (108) according to one of the preceding claims, **characterized in that** the latching pin (112) has a projection (202) and is configured to be moved out of the first position into the second position during the rotational movement (300) of the adjusting ring (114) via a receiving action of the projection (202) on the control cam (200).

5. Apparatus (108) according to one of the preceding claims, **characterized in that**, in order to form a lead (310) of the control cam (200) with respect to the lug (306), the lug (306) and the control cam (200) are formed on the adjusting ring (114) such that they are offset by a predefined angle (402).

6. Apparatus (108) according to one of the preceding claims, **characterized in that** the control cam (200) is formed by a section of the adjusting ring (114) which is **characterized by** a greater radial extent of the adjusting ring (114) than in the remaining region of the adjusting ring (114), a starting region (302) of the control cam (200), in relation to a direction of the rotational movement (300) of the adjusting ring (114), being **characterized by** a first transition of bevelled form between the section and the remaining region, and an end region (304) of the control cam (200) being **characterized by** a second transition of stepped form between the section and the remaining region.

7. Apparatus (108) according to one of the preceding claims, **characterized in that**, furthermore, the apparatus (108) has a coupling element (208) which couples the adjusting ring (114) to an actuator and is configured to transmit a torque of the actuator to the adjusting ring (114), in order to produce the rotational movement (300) of the adjusting ring (114).

8. Apparatus (108) according to one of the preceding claims, **characterized in that** the adjusting ring (114) has at least one further control cam (200) and at least one further lug (306).

9. Shifting apparatus (102) for shifting an automatic transmission (104) of a vehicle (100), the shifting apparatus (102) having the following features:
an operating element (106) which is configured to be adjusted between a park position of the automatic transmission (104) and at least one driving position of the automatic transmission (104); and
an apparatus (108) for adjusting the operating element (106) according to one of the preceding claims, the latching crown (110) of the apparatus (108) being coupled directly to the operating element (106).

10. Method (700) for operating an apparatus (108) for adjusting an operating element (106) of an automatic transmission (104) of a vehicle (100) into a park position, the apparatus (108) having a rotatably mounted latching crown (110) which is coupled directly to the operating element (106) and has a stop element (308), the latching crown having a circumferential latching contour which is **characterized by** a plurality of elevations which are arranged in a crown-like manner, a latching pin (112) which is configured to fix the latching crown (110) in a first position and to release the latching crown (110) for a rotational movement (300) in a second position, and a rotatably mounted adjusting ring (114) with a control cam (200) and a lug (306), **characterized in that** the method (700) has the following step:
rotation (702) of the adjusting ring (114), in order to move the latching pin (112) out of the first position into the second position by means of the control cam (200) and to drive the stop element (308) by means of the lug (306), in order to rotate the latching crown (110) to such an extent that the operating element (106) is adjusted into the park position.

## Revendications

1. Dispositif (108) pour le déplacement d'un élément d'actionnement (106) d'une boîte de vitesses automatique (104) d'un véhicule (100) dans une position de stationnement, le dispositif (108) présentant les caractéristiques suivantes :
un peigne d'encliquetage (110) supporté à rotation, accouplé directement à l'élément d'actionnement (106), comprenant un élément de butée (308), le peigne d'encliquetage présentant un contour d'encliquetage périphérique **caractérisé par** une pluralité de rehaussements disposés sous forme de peigne ; et
une goupille d'encliquetage (112) qui est réalisée dans une première position de manière à fixer le peigne d'encliquetage (110) et dans une deuxième position à libérer le peigne d'encliquetage (110) pour permettre un mouvement de rotation (300) ;
**caractérisé en ce que** le dispositif (108) présente les caractéristiques suivantes :
une bague de réglage (114) supportée à rotation avec une came de commande (200) et un ergot (306), la came de commande (200) étant formée de manière à déplacer la goupille d'encliquetage (112) de la première position dans la deuxième position lors d'un mouvement de rotation (300) de la bague de réglage (114), et l'ergot (306) étant formé de manière à entraîner l'élément de butée (308) lors du mouvement de rotation (300) de la bague de réglage (114), afin de faire tourner le peigne d'encliquetage (110) pour déplacer l'élément d'actionnement (106) dans la position de stationnement.

2. Dispositif (108) selon la revendication 1, **caractérisé en ce que** le dispositif (108) présente en outre un élément de ressort connecté à la goupille d'encliquetage (112), la came de commande (200) étant formée de manière à déplacer la goupille d'encliquetage (112) de la première position dans la deuxième position à l'encontre d'une force de l'élément de ressort.

3. Dispositif (108) selon l'une quelconque des revendications précédentes, **caractérisé en ce que** le peigne d'encliquetage (110) est disposé entre la bague de réglage (114) et l'élément d'actionnement (106) et la goupille d'encliquetage (112) est disposée radialement par rapport au peigne d'encliquetage (110) et à la bague de réglage (114) et est réalisée de manière à être déplacée entre la première position et la deuxième position dans la direction radiale (204) par rapport au peigne d'encliquetage (110) et à la bague de réglage (114).

4. Dispositif (108) selon l'une quelconque des revendications précédentes, **caractérisé en ce que** la goupille d'encliquetage (112) présente une saillie (202) et est réalisée de manière à être déplacée de la première position dans la deuxième position lors du mouvement de rotation (300) de la bague de réglage (114) par le biais d'une réception de la saillie (202) sur la came de commande (200).

5. Dispositif (108) selon l'une quelconque des revendications précédentes, **caractérisé en ce que** l'ergot (306) et la came de commande (200) sont formés sur la bague de réglage (114) de manière décalée d'un angle prédéterminé (402) en vue de constituer une avance (310) de la came de commande (200) par rapport à l'ergot (306).

6. Dispositif (108) selon l'une quelconque des revendications précédentes, **caractérisé en ce que** la came de commande (200) est formée par une portion de la bague de réglage (114) qui est **caractérisée par** une plus grande étendue radiale de la bague de réglage (114) que dans la région restante de la bague de réglage (114), une région de début (302) de la came de commande (200) étant **caractérisée, par** rapport à un sens du mouvement de rotation (300) de la bague de réglage (114), par une première transition de forme biseautée entre la portion et la région restante et une région d'extrémité (304) de la came de commande (200) étant **caractérisée par** une deuxième transition de forme étagée entre la portion et la région restante.

7. Dispositif (108) selon l'une quelconque des revendications précédentes, **caractérisé en ce que** le dispositif (108) présente en outre un élément d'accouplement (208) accouplant la bague de réglage (114) à un actionneur, lequel élément d'accouplement est réalisé de manière à transmettre un mouvement de rotation de l'actionneur sur la bague de réglage (114) afin de générer le mouvement de rotation (300) de la bague de réglage (114).

8. Dispositif (108) selon l'une quelconque des revendications précédentes, **caractérisé en ce que** la bague de réglage (114) présente au moins une came de commande supplémentaire (200) et au moins un ergot supplémentaire (306).

9. Dispositif de changement de vitesses (102) pour le changement de vitesses d'une boîte de vitesses automatique (104) d'un véhicule (100), le dispositif de changement de vitesses (102) présentant les caractéristiques suivantes :
un élément d'actionnement (106) qui est réalisé de manière à être déplacé entre une position de stationnement de la boîte de vitesses automatique (104) et au moins une position de conduite de la boîte de vitesses automatique (104) ; et
un dispositif (108) pour déplacer l'élément d'actionnement (106) selon l'une quelconque des revendications précédentes, le peigne d'encliquetage (110) du dispositif (108) étant accouplé directement à l'élément d'actionnement (106).

10. Procédé (700) pour faire fonctionner un dispositif (108) pour déplacer un élément d'actionnement (106) d'une boîte de vitesses automatique (104) d'un véhicule (100) dans une position de stationnement, le dispositif (108) présentant un peigne d'encliquetage (110) supporté à rotation et accouplé directement à l'élément d'actionnement (106) avec un élément de butée (308), le peigne d'encliquetage présentant un contour d'encliquetage périphérique **caractérisé par** une pluralité de rehaussements disposés en forme de peigne, une goupille d'encliquetage (112) qui est réalisée dans une première position de manière à fixer le peigne d'encliquetage (110) et, dans une deuxième position, à libérer le peigne d'encliquetage (110) en vue d'un mouvement de rotation (300), et une bague de réglage (114) supportée à rotation avec une came de commande (200) et un ergot (306), **caractérisé en ce que** le procédé (700) présente l'étape suivants :
rotation (702) de la bague de réglage (114) afin de déplacer la goupille d'encliquetage (112) au moyen de la came de commande (200) de la première position dans la deuxième position et d'entraîner l'élément de butée (308) au moyen de l'ergot (306) afin de faire tourner le peigne d'encliquetage (110) dans une mesure telle que l'élément d'actionnement (106) soit déplacé dans la position de stationnement.
